# EUROPÄISCHE PATENTSCHRIFT

(11) **EP 1 426 202 B1**
(45) Veröffentlichungstag und Bekanntmachung des Hinweises auf die Patenterteilung: **22.02.2006**
(21) Anmeldenummer: 03450270.8
(22) Anmeldetag: 03.12.2003
(51) Int. Cl.: B60D 1/28

(54) **Kupplungsvorrichtung**
Trailer hitch
Dispositif d'attelage

(30) Priorität: 05.12.2002 AT 18242002
(43) Veröffentlichungstag der Anmeldung: 09.06.2004
(60) Teilanmeldung: 04022668.0
(73) Patentinhaber: Scharmüller, Josef, A-4870 Vöcklamarkt (AT)
(72) Erfinder: Scharmüller, Josef, A-4870 Vöcklamarkt (AT)
(74) Vertreter: Gibler, Ferdinand

(56) Entgegenhaltungen:
- DE-C1- 10 118 862
- FR-A- 2 570 991
- US-A- 3 779 653
- US-A- 3 826 517
- US-A- 4 208 065

## Beschreibung

Die Erfindung betrifft eine Kupplungsvorrichtung mit einer Kupplungskugel zur Aufnahme einer eine Kugelpfanne aufweisenden Zugöse und einem Niederhalter, wobei der Niederhalter um eine Schwenkachse von einer ersten Position in eine zweite Position verschwenkbar ist und mittels wenigstens eines Fixierelementes in der ersten Position fixierbar ist, und wobei ein Auslöseelement zum Verbringen des Niederhalters von der zweiten Position in die erste Position vorgesehen ist.

Bei bekannten derartigen Kupplungsvorrichtungen wird beim Einkuppeln die Zugöse auf die Kugelpfanne aufgesetzt und anschließend der Niederhalter von der zweiten Position in die erste Position verschwenkt und mittels einer Stecksicherung fixiert. Nachteilig dabei ist, daß die Stecksicherung nur bei einer vorgebbaren Position des Niederhalters einbringbar ist und insbesondere durch Verschleiß, z.B. ein vergrößertes Lagerspiel od. dgl., und/oder Verschmutzung das Fixieren des Niederhalters erschwert wird.

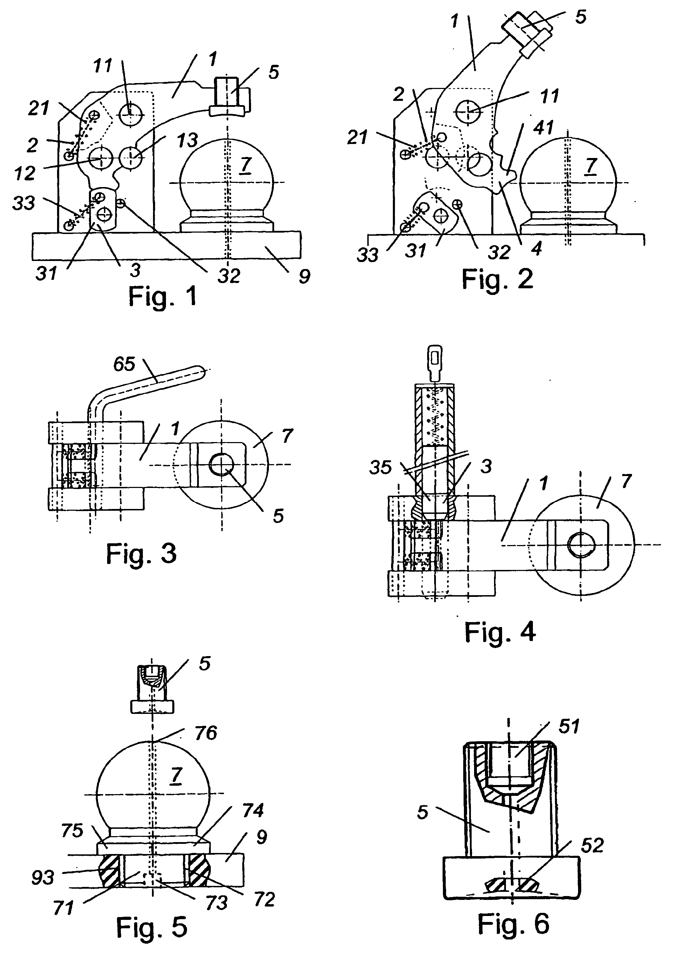

Die US 3 779 653 A offenbart eine Kupplungsvorrichtung, welche für Pfannen- und Ring-Zugösen geeignet ist. Die Ausführungsform gemäß den Fig. 5 und 6 weist ein Halteelement auf, das um eine Achse schwenkbar gelagert ist. Bei der Verwendung der Kupplungsvorrichtung mit einer eine Kugelpfanne aufweisenden Zugöse ist vorgesehen, dass das Halteelement in einer offenen Position gehalten wird und bei Verwendung mit einer Ringzugöse wird das Haleelement in die geschlossene Position gebracht, wodurch ein unbeabsichtigtes Lösen der Ringzugöse verhindert wird.

Aufgabe der vorliegenden Erfindung ist es, eine Kupplungsvorrichtung der eingangs genannten Art weiterzubilden, bei der die Nachteile der bekannten Lösungen vermieden werden, mit der der Vorgang des Kuppelns und/oder des Abkuppeln einfach und schnell durchgeführt werden kann und bei dem eine sichere und belastbare Verbindung erreicht wird.

Erfindungsgemäß wird dies dadurch erreicht, daß ein Stellelement vorgesehen ist, wobei vom Stellelement bei gelöstem Fixierelement auf den Niederhalter in der ersten Position eine erste Haltekraft und in der zweiten Position eine zweite Haltekraft wirkt.

Dadurch ergibt sich der Vorteil, daß der Niederhalter in der ersten Position und in der zweiten Position jeweils durch das Stellelement gehalten wird und durch Betätigung des Auslöseelementes das Verbringen des Niederhalters von der zweiten Position in die erste Position automatisierbar ist, wobei das Auslöseelement insbesondere von der Zugöse und/oder mittels einer Fernbedienung od. dgl. betätigbar ausgebildet sein kann. Weiters kann eine Fernbedienbarkeit des Fixierelementes vorgesehen sein, wodurch insbesondere der Kupplungsvorgang besonders einfach ausgestaltet werden kann. Das Stellelement kann aufgrund der Masseverteilung des Niederhalters, als Federelement, als Kolbenelement od. dgl. ausgebildet sein.

In Weiterführung der Erfindung kann vorgesehen sein, daß das Stellelement als Druckelement, insbesondere als Federelement, druckbeaufschlagbares Kolbenelement od. dgl., ausgebildet ist. Durch die Ausbildung als Druckelement kann die Gefahr eines Versagens des Stellelementes aufgrund Materialermüdung und/oder Verschleiß gering gehalten werden. Bei einem Federelement kann auf einfache Weise eine Vorspannung aufgebracht werden, wodurch die erste Haltekraft und/oder die zweite Haltekraft vorgegeben werden können. Bei einem druckbeaufschlagten Kolbenelement können die Haltekräfte mittels des Druckes des mit dem Kolbenelement wirkenden Druckmediums vorgegeben und/oder verändert werden.

Gemäß einer anderen Ausführungsform der Erfindung kann vorgesehen sein, daß das wenigstens eine Fixierelement mit einer Fernbedienungseinheit verbunden ist. Dadurch kann der Vorgang des Kuppelns und/oder des Abkuppelns besonders einfach ausgestaltet werden.

In weiterer Ausgestaltung der Erfindung kann vorgesehen sein, daß das wenigstens eine Fixierelement als verschwenkbare Klappe od. dgl. ausgebildet ist. Mittels einer Klappe od. dgl. kann der Niederhalter in der ersten Position mittels einer Schwenkbewegung fixiert und/oder freigegeben werden, wobei eine Schwenkbewegung einfach durchführbar und insbesondere automatisierbar ist.

In Weiterbildung der Erfindung kann vorgesehen sein, daß die Klappe federbelastet ist und ein Anschlag vorgesehen ist. Durch die Federbelastung kann sichergestellt werden, daß die Klappe selbsttätig gegen den Anschlag bewegt wird, wodurch insbesondere der Kupplungsvorgang zumindest teilweise automatisiert werden kann.

Gemäß einer weiteren Ausgestaltung der Erfindung kann vorgesehen sein, daß der Niederhalter in der ersten Position bei Belastung die Klappe in Richtung des Anschlags belastet. Durch diese Ausbildung kann sichergestellt werden, daß die Klappe auch ohne einer Federbelastung, insbesondere bei einem Versagen der Federbelastung, aufgrund Selbsthemmung in der den Niederhalter fixierenden Stellung verbleibt.

Gemäß einer weiteren Ausführungsform der Erfindung kann vorgesehen sein, daß das Fixierelement als Bolzen ausgebildet ist. Ein Bolzen stellt ein besonders einfaches und kostengünstig herstellbares Fixierelement dar.

Gemäß einer anderen Ausgestaltung der Erfindung kann vorgesehen sein, daß das Auslöseelement einen Vorsprung umfaßt. Durch Verschieben des Vorsprunges, insbesondere mittels der Zugöse, kann der Niederhalter von der zweiten Position in die erste Position verbracht werden, wodurch eine zumindest teilweise Automatisierung des Kuppelns erreicht werden kann.

Eine andere mögliche Ausführungsform der Erfindung kann darin bestehen, daß eine mit dem Niederhalter lösbar verbundene Niederhalterschraube vorgesehen ist. Durch die Niederhalterschraube kann der aufgrund der Reibung mit der Zugöse entstehende Verschleiß durch Ersatz oder Verstellen der Niederhalterschraube ausgeglichen werden, wobei die Instandhaltungskosten gering gehalten werden können. Weiters können für den Niederhalter und die Niederhalterschraube unterschiedliche Materialien vorgesehen sein, wodurch die Belastbarkeit und Haltbarkeit des Niederhalters verbessert werden können.

In diesem Zusammenhang kann in Weiterbildung der Erfindung vorgesehen sein, daß die Niederhalterschraube eine Innensechskant-Bohrung od. dgl. aufweist. Durch diese Ausführung kann eine besonders geringe Bauhöhe der Niederhalterschraube erreicht werden.

In Weiterführung der Erfindung kann vorgesehen sein, daß die Niederhalterschraube wenigstens eine Schmieröffnung aufweist. Durch die Schmieröffnung kann die Lebensdauer der Niederhalterschraube erhöht werden und die Reibung zwischen der Niederhalterschraube und der Zugöse verringert werden.

Gemäß einer anderen Ausführungsform der Erfindung kann vorgesehen sein, daß eine Fangvorrichtung für die Zugöse vorgesehen ist. Durch die Fangvorrichtung kann der Kupplungsvorgang, insbesondere bei einem zumindest teilweise automatisierten Kupplungsvorgang, besonders einfach und zuverlässig ausgestaltet werden.

In Weiterbildung der Erfindung kann vorgesehen sein, daß eine Grundplatte mit Befestigungsöffnungen für die Aufnahme von Schrauben od. dgl. vorgesehen ist. Diese Ausbildung ermöglicht eine einfache Befestigung der erfindungsgemäßen Kupplungsvorrichtung an einem Fahrzeug, Anhänger od. dgl., wobei insbesondere auch eine nachträgliche Befestigung der Kupplungsvorrichtung erfolgen kann.

In weiterer Ausgestaltung der Erfindung kann vorgesehen sein, daß die Grundplatte eine mit einem Innengewinde ausgebildete Aufnahmeöffnung, insbesondere für die Kupplungskugel, aufweist. Durch das Ausbilden des Innengewindes kann die Kupplungskugel kraftschlüssig mit der Grundplatte verbunden werden, wobei anstelle der Kupplungskugel auch ein Kupplungszapfen od. dgl. mit der Grundplatte verbindbar ist.

In diesem Zusammenhang kann in weiterer Ausbildung der Erfindung vorgesehen sein, daß die Kupplungskugel einen mit einem dem Innengewinde gegengleichen Außengewinde ausgebildeten Fortsatz aufweist. Durch den Fortsatz mit dem Außengewinde kann eine kranschlüssige Verbindung mit der Grundplatte sichergestellt werden, wobei eine geringe Bauhöhe des Fortsatzes erreicht werden kann.

Eine andere mögliche Ausführungsform der Erfindung kann darin bestehen, daß der Fortsatz eine Innensechskant-Bohrung od. dgl. und/oder an einem der Kupplungskugel anliegenden Ende eine Schraubfläche aufweist. Durch diese Ausführungen kann die Bauhöhe des Fortsatzes besonders gering gehalten werden.

In Weiterführung der Erfindung kann vorgesehen sein, daß die Kupplungskugel wenigstens eine Schmieröffnung aufweist. Durch das Vorsehen wenigstens einer Schmieröffnung kann die Reibung zwischen der Kupplungskugel und der Zugöse gering gehalten werden, wodurch der Verschleiß der Kupplungskugel und/oder der Zugöse und deren Lebensdauer erhöht werden. Weiters können die Instandhaltungskosten gering gehalten werden.

Die Erfindung wird unter Bezugnahme auf die beigeschlossenen Zeichnungen, in welchen Ausführungsformen dargestellt sind, näher beschrieben. Dabei zeigt:
Fig. 1 die Seitenansicht einer Ausführungsform einer erfindungsgemäßen Kupplungsvorrichtung, wobei der Niederhalter in der ersten Position angeordnet ist;
Fig. 2 die Seitenansicht der Kupplungsvorrichtung gemäß Fig. 1, wobei der Niederhalter in der zweiten Position angeordnet ist;
Fig. 3 eine Draufsicht auf die Kupplungsvorrichtung gemäß Fig. 1;
Fig. 4 die Draufsicht auf eine andere Ausführungsform der erfindungsgemäßen Kupplungsvorrichtung;
Fig. 5 eine Vorderansicht auf eine bereichsweise aufgerissene Grundplatte, eine Kupplungskugel und eine Niederhalterschraube;
Fig. 6 eine vergrößerte und bereichsweise aufgerissene Darstellung der Niederhalterschraube gemäß Fig. 5, in Seitenansicht;
Fig. 7 eine Draufsicht auf eine Ausführungsform einer erfindungsgemäßen Kupplungsvorrichtung mit einem Fangmaul;
Fig. 8 eine Draufsicht auf eine Ausführungsform einer erfindungsgemäßen Kupplungsvorrichtung mit einem Fangmaul und einer Grundplatte mit Befestigungsöffnungen;
Fig. 9 eine Seitenansicht einer weiteren Ausführungsform einer erfindungsgemäßen Kupplungsvorrichtung mit einem Kolbenelement; und
Fig. 10 eine Draufsicht auf die Kupplungsvorrichtung gemäß Fig. 9.

In den Fig. 1 bis 3 ist eine erste Ausführungsform einer erfindungsgemäßen Kupplungsvorrichtung mit einer Kupplungskugel 7 zur Aufnahme einer eine Kugelpfanne aufweisenden Zugöse und einem Niederhalter 1 dargestellt. Der Niederhalter 1 ist um eine Schwenkachse 11 von einer ersten Position in eine zweite Position verschwenkbar und mittels wenigstens eines Fixierelementes 3 in der ersten Position fixierbar. In Fig. 1 ist der Niederhalter 1 in der ersten Position und in Fig. 2 ist der Niederhalter in der zweiten Position angeordnet.

Die Kupplungsvorrichtung weist ein Stellelement 2, wobei vom Stellelement 2 auf den Niederhalter 1 in der ersten Position eine erste Haltekraft und in der zweiten Position eine zweite Haltekraft wirkt, und ein Auslöseelement 4 zum Verbringen des Niederhalters 1 von der zweiten Position in die erste Position auf.

Befindet sich der Niederhalter 1 in der zweiten Position, so wird die Kupplungskugel 7 freigegeben und eine Zugöse kann auf die Kupplungskugel 7 aufgesetzt werden. Durch Auslösen des Auslöseelementes 4 wird der Niederhalter 1 von der zweiten Position in die erste Position verbracht. Der Niederhalter 1 verhindert ein Abheben der Zugöse von der Kupplungskugel 7 und stellt sicher, daß die Zugöse mit der Kupplungsvorrichtung verbunden bleibt.

Auf den Niederhalter 1 wirkt in der zweiten Position vom Stellelement 2 die zweite Haltekraft, welche den Niederhalter 1 in der zweiten Position hält und in der ersten Position vom Stellelement 2 die erste Haltekraft, welche den Niederhalter 1 in der ersten Position hält. Dadurch wird sichergestellt, daß der Niederhalter 1 gegebenenfalls in der zweiten Position verbleibt, sodaß die Zugöse auf die Kupplungskugel 7 aufgesetzt werden kann und nicht vorzeitig unbeabsichtigt selbsttätig in die erste Position verschwenkt.

In der ersten Position wirkt die erste Haltekraft auf den Niederhalter 1, wodurch die Zugöse gegebenenfalls positioniert wird und das Fixieren des Fixierelementes 3 erleichtert wird.

Das Stellelement 2 kann als Zusatzmasse ausgebildet sein, welche mit dem Niederhalter 1 verbunden ist und sicherstellt, daß der gemeinsame Massenmittelpunkt des Niederhalters und des Stellelementes 2 bei der Verschwenkung des Niederhalters 1 von der zweiten Position in die erste Position über die senkrechte Lage über der Schwenkachse 11 geführt wird. Dabei können das Stellelement 2 und der Niederhalter 1 einstückig ausgebildet sein.

Ist das Stellelement 2 als Kraftelement ausgebildet, so kann die erste Haltekraft und/oder die zweite Haltekraft erhöht werden, wodurch die Zuverlässigkeit der erfindungsgemäßen Kupplungsvorrichtung verbessert wird. Dabei erscheint es insbesondere günstig zu sein, wenn das Stellelement 2 als Druckelement ausgebildet ist, da eine Druckkraft einfach und zuverlässig ausgebildet werden kann.

Das in den Fig. 1 bis 3 dargestellte Stellelement 2 ist als Federelement 21 ausgebildet. Das Federelement 21 stellt eine besonders einfache und zuverlässige Ausgestaltung des Stellelementes 2 dar und ist kostengünstig herstellbar. Ein weiterer Vorteil des Federelementes 21 ist, daß der Niederhalter jeweils kraftschlüssig und nicht formschlüssig in der ersten Position bzw. der zweiten Position gehalten wird und durch eine, die entsprechende Haltekraft übersteigende Kraft verschwenkt werden kann. Umfaßt das Auslöseelement 4 einen Vorsprung 41, so kann durch ein Verschieben und/oder Verschwenken od. dgl. des Vorsprungs 41 und damit des Auslöseelementes 4 der Niederhalter 1 von der zweiten Position in die erste Position verbracht werden, wobei das Verbringen nach einer vorgebbaren Bewegung des Vorsprungs 41 selbsttätig erfolgen kann.

Dabei kann, wie aus der Fig. 2 ersichtlich ist, der Vorsprung 41 im, Bereich der Kupplungskugel 7 angeordnet sein, wenn sich der Niederhalter 1 in der zweiten Position befindet. Wird eine Zugöse auf den Kugelkopf 7 aufgesetzt, so wird der Vorsprung 41 verschoben und der Niederhalter 1 in die erste Position verbracht. Dabei ist es nicht erforderlich, daß der Vorsprung 41 die gesamte Wegstrecke verschoben wird, da nach einer vorgebbaren Wegstrecke das Federelement 21 den Niederhalter 1 in die erste Position verschwenkt. Umgekehrt kann beim Abheben einer Zugöse von dem Kugelkopf 7 der Niederhalter 1 so weit verschwenkt werden, daß er vom Federelement 21 in die zweite Position verschwenkt wird.

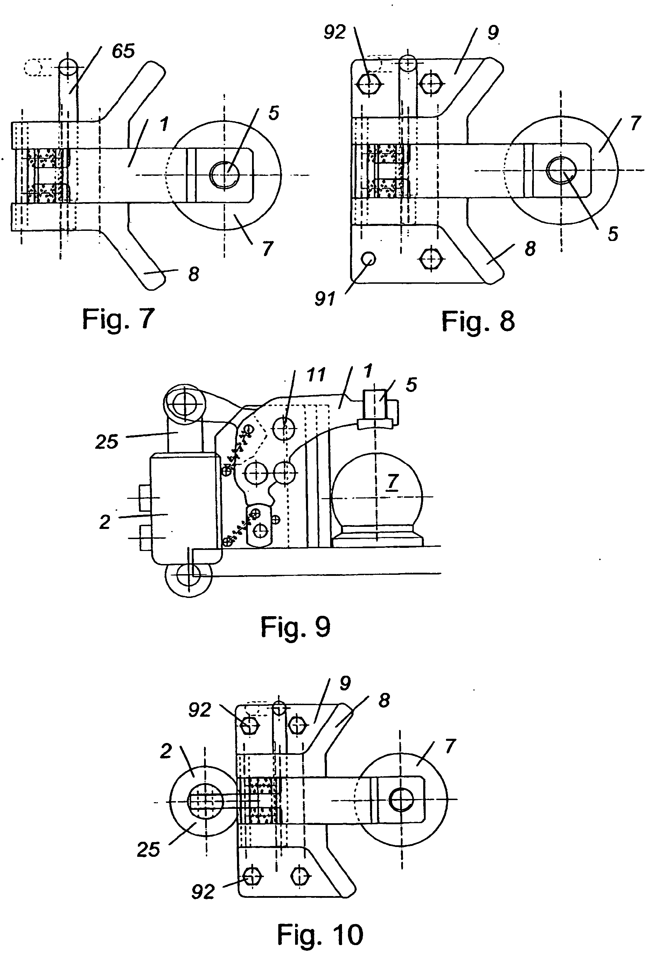

Bei der in den Fig. 9 und 10 gezeigten Ausführungsform einer erfindungsgemäßen Kupplungsvorrichtung ist das Stellelement 2 als druckbeaufschlagbares Kolbenelement 25 ausgebildet. Ist das Kolbenelement mit einer ein Druckmedium beinhaltenden Druckleitung od. dgl. verbunden, kann auf einfache Weise durch Veränderung des Druckes des Druckmediums die jeweilige Haltekraft verändert werden. Dabei kann insbesondere bei dem Auftreten negativer Stützlasten, bei denen die Zugöse gegen den Niederhalter 1 drückt, sichergestellt werden, daß die Zugöse auf der Kupplungskugel 7 aufliegt.

Bei anderen Ausführungsformen der erfindungsgemäßen Kupplungsvorrichtung kann das Stellelement auch als Federpaket, Tellerfeder, Gewindestange, Kniehebel od. dgl. ausgebildet sein.

Das Fixierelement 3 kann mit einer Fernbedienungseinheit verbunden sein. Die Fernbedienungseinheit kann einen Seilzug, eine hydraulische Leitung, eine pneumatische Leitung eine elektrische Leitung od. dgl. umfassen. Dadurch kann der Niederhalter 1 in der ersten Position fernbedient fixiert und/oder freigegeben werden, wodurch der Kupplungsvorgang und/oder der Abkupplungsvorgang vereinfacht werden kann, wobei insbesondere ein Fahrer eines Zugfahrzeuges vom Führerstand aus die Kupplungsvorrichtung betätigen kann.

Neben der Fernbedienungseinheit kann ein Handhebel 65 od. dgl. vorgesehen sein, wodurch die Möglichkeit einer manuellen Betätigung des Fixierelementes 3 sichergestellt werden kann, sodaß das Fixierelement 3 insbesondere auch bei einem Ausfall der Fernbedienungseinheit betätigbar ist.

Bei den in den Fig. 1 bis 3 und 9 und 10 dargestellten Ausführungsformen ist das wenigstens eine Fixierelement 3 als verschwenkbare Klappe 31 ausgebildet. Die Klappe 31 ist federbelastet, wobei eine Feder 33 die Klappe 31 gegen einen Anschlag 32 belastet. Ist der Niederhalter in der ersten Position, so wird durch die Feder 33 und den Anschlag 32 sichergestellt, daß die Klappe 31 in der den Niederhalter 1 fixierenden Stellung ist. Die Zuverlässigkeit der Klappe 31 kann weiter verbessert werden, wenn der Niederhalter 1 in der ersten Position bei Belastung die Klappe 31 in Richtung des Anschlags 32 belastet. Dies ist insbesondere der Fall, wenn der Massenmittelpunkt zwischen der Drehachse der Klappe 31 und dem Anschlag 32 angeordnet ist. Mittels der Klappe 31 können Belastungen vom Niederhalter 1 von der Kupplungsvorrichtung aufgenommen werden.

Ist der Niederhalter 1 in der zweiten Position und wird die Klappe 31 freigegeben, sodaß sie am Anschlag ansteht, so wird sie gemäß der in den Fig. 1 bis 3 gezeigten Ausführungsform selbsttätig verschwenkt, um das Verbringen des Niederhalters 1 zu ermöglichen, wobei aufgrund der Feder 33 eine nachfolgende selbsttätige Fixierung des Niederhalters erfolgt.

Bei der Ausführungsform einer erfindungsgemäßen Kupplungsvorrichtung gemäß Fig. 4 ist das Fixierelement 3 als Bolzen 35 ausgebildet. Für die Fixierung kann der Niederhalter 1 Öffnungen 12, Ausnehmungen 13 od. dgl. aufweisen. Auch der Bolzen 35 kann manuell und/oder mit einer Fernbedienungseinheit betätigbar sein.

Ist das Stellelement 2 als Kolbenelement 25 od. dgl. ausgebildet, erscheint es zweckmäßig, wenn das Fixierelement 3 ein Spiel mit dem Niederhalter 1 aufweist, um eine unmittelbare Kraftwirkung des Stellelementes 2 auf den Niederhalter 1 im fixierten Zustand zu ermöglichen. Dazu können insbesondere die Öffnungen 12 als Langlöcher ausgebildet sein. Dadurch kann die Zugöse vom Niederhalter 1 gegen die Kupplungskugel gepreßt werden, wobei die übertragene Kraft insbesondere im Bereich von 3 % bis 6 % des Anhängergewichts sein kann. Durch diese Fixierung der Zugöse gegenüber der Kupplungskugel können die Fahreigenschaften des Anhängers wesentlich verbessert werden. Insbesondere bei negativen Stützlasten und/oder geringen Stutzlasten kann durch die vom Niederhalter 1 aufgebrachte Kraft eine Stabilisierung des Anhängers erreicht werden.

Bei der erfindungsgemäßen Kupplungsvorrichtung können auch zwei oder mehrere Fixierelemente 3 vorgesehen sein, welche insbesondere voneinander unabhängig betätigbar sind, um ein unbeabsichtigtes Öffnen der Kupplungsvorrichtung wirksam verhindern zu können. Dabei können gleiche und/oder verschiedene Fixierelemente 3 kombiniert werden oder auch eine zusätzliche Fixierung des Fixierelementes 3 vorgesehen sein. Es kann auch vorgesehen sein, daß die Länge des Stellelementes 2 fixierbar ist und dieses als Fixierelement 3 ausgebildet ist.

Mit dem Niederhalter 1 kann eine Niederhalterschraube 5 lösbar verbunden sein. In Fig. 5 ist die Kupplungskugel 7 und die Niederhalterschraube 5 dargestellt, wenn der Niederhalter 1 in der erste Position ist. Dabei kann zwischen der Niederhalterschraube 5 und der Kupplungskugel 7 die Zugöse angeordnet sein. Der Niederhalter 1 kann eine Bohrung mit einem Innengewinde und die Niederhalterschraube 5 einen zylindrischen Abschnitt mit einem gegengleichen Außengewinde aufweisen. Dadurch ist die Niederhalterschraube 5 gegenüber dem Niederhalter 1 höhenverstellbar, wodurch das Spiel zwischen der Zugöse und der Kupplungskugel 7 und zwischen der Zugöse und der Niederhalterschraube 5 einstellbar ist.

Dabei können Herstellungstoleranzen und/oder verschleißbedingte Spalte ausgeglichen werden. Im Betrieb tritt bei der Niederhalterschraube 5 aufgrund der Reibung mit der Zugöse ein Verschleiß auf, wobei es bei der Instandhaltung ausreicht, wenn nur die Niederhalterschraube 5 und nicht der gesamte Niederhalter 1 ausgetauscht wird. Der Verschleiß der Niederhalterschraube 5 und/oder der Zugöse kann verringert werden, wenn die Niederhalterschraube 5 eine Schmieröffnung 52 aufweist.

In Fig. 6 ist die Niederhalterschraube 5 vergrößert dargestellt. Eine geringe Bauhöhe kann erreicht werden, wenn die Niederhalterschraube 5 eine Innensechskant-Bohrung 51 od. dgl. aufweist. Dadurch ist für den Bereich zum Einstellen der Niederhalterschraube 5 keine zusätzliche Bauhöhe erforderlich.

Die in Fig. 7 dargestellt Ausführungsform der erfindungsgemäßen Kupplungsvorrichtung weist eine Fangvorrichtung 8 für die Zugöse auf, wodurch die Zugöse beim Einkuppeln in die richtige Lage über der Kupplungskugel 7 gebracht wird. Durch die Fangvorrichtung 8 kann die Bedienung der Kupplungsvorrichtung erleichtert werden.

Bei der in Fig. 8 gezeigten Ausführungsform der erfindungsgemäßen Kupplungsvorrichtung ist eine Grundplatte 9 mit Befestigungsöffnungen 91 für die Aufnahme von Schrauben 92 od. dgl. vorgesehen. Dadurch kann die Kupplungsvorrichtung einfach nachträglich an ein Zugfahrzeug od. dgl. angebracht und/oder einfach ausgetauscht werden.

Die Grundplatte 9 kann eine mit einem Innengewinde ausgebildete Aufnahmeöffnung 93, insbesondere für die Kupplungskugel 7, aufweisen. Die Kupplungskugel 7 kann einen mit einem dem Innengewinde gegengleichen Außengewinde 72 ausgebildeten Fortsatz 71 aufweisen. Dadurch kann die Kugel auf einfache Weise mit der Grundplatte 9 kraftschlüssig verbunden werden. Bei Bedarf kann anstelle der Kupplungskugel 7 auch ein Kupplungszapfen od. dgl. mit der Grundplatte 9 verbunden werden, wobei der Niederhalter 1 auch bei Verwendung eines Kupplungszapfens als Sicherungselement wirken kann.

Eine geringe Bauhöhe kann erreicht werden, wenn der Fortsatz 71 eine Innensechskant-Bohrung 73 od. dgl. und/oder an einem der Kupplungskugel 7 anliegenden Ende 74 eine Schraubfläche 75 aufweist. Die Lebensdauer der Kupplungskugel 7 und/oder der Zugöse kann erhöht werden, wenn die Kupplungskugel 7 wenigstens eine Schmieröffnung 76 aufweist.

## Patentansprüche

1. Kupplungsvorrichtung mit einer Kupplungskugel (7) zur Aufnahme einer eine Kugelpfanne aufweisenden Zugöse und einem Niederhalter (1), wobei der Niederhalter (1) um eine Schwenkachse (11) von einer ersten Position in eine zweite Position verschwenkbar ist und mittels wenigstens eines Fixierelementes (3) in der ersten Position fixierbar ist, und wobei ein Auslöseelement (4) zum Verbringen des Niederhalters (1) von der zweiten Position in die erste Position vorgesehen ist, **dadurch gekennzeichnet, daß** ein Stellelement (2) vorgesehen ist, wobei vom Stellelement (2) bei gelöstem Fixierelement (3) auf den Niederhalter (1) in der ersten Position eine erste Haltekraft und in der zweiten Position eine zweite Haltekraft wirkt.

2. Kupplungsvorrichtung nach Anspruch 1, **dadurch gekennzeichnet, daß** das Stellelement (2) als Druckelement, insbesondere als Federelement (21), druckbeaufschlagbares Kolbenelement (25) od. dgl., ausgebildet ist.

3. Kupplungsvorrichtung nach Anspruch 1 oder 2, **dadurch gekennzeichnet, daß** das wenigstens eine Fixierelement (3) mit einer Fernbedienungseinheit (6) verbunden ist.

4. Kupplungsvorrichtung nach Anspruch 1, 2 oder 3, **dadurch gekennzeichnet, daß** das wenigstens eine Fixierelement (3) als verschwenkbare Klappe (31) od. dgl. ausgebildet ist.

5. Kupplungsvorrichtung nach Anspruch 4, **dadurch gekennzeichnet, daß** die Klappe (31) federbelastet ist und ein Anschlag (32) vorgesehen ist.

6. Kupplungsvorrichtung nach Anspruch 5, **dadurch gekennzeichnet, daß** der Niederhalter (1) in der ersten Position bei Belastung die Klappe (31) in Richtung des Anschlags (32) belastet.

7. Kupplungsvorrichtung nach einem der Ansprüche 1 bis 6, **dadurch gekennzeichnet, daß** das Fixierelement (3) als Bolzen (35) ausgebildet ist.

8. Kupplungsvorrichtung nach einem der Ansprüche 1 bis 7, **dadurch gekennzeichnet, daß** das Auslöseelement (4) einen Vorsprung (41) umfaßt.

9. Kupplungsvorrichtung nach einem der Ansprüche 1 bis 8, **dadurch gekennzeichnet, daß** eine mit dem Niederhalter (1) lösbar verbundene Niederhalterschraube (5) vorgesehen ist.

10. Kupplungsvorrichtung nach Anspruch 9, **dadurch gekennzeichnet, daß** die Niederhalterschraube (5) eine Innensechskant-Bohrung (51) od. dgl. aufweist.

11. Kupplungsvorrichtung nach Anspruch 9 oder 10, **dadurch gekennzeichnet, daß** die Niederhalterschraube (5) wenigstens eine Schmieröffnung (52) aufweist.

12. Kupplungsvorrichtung nach einem der Ansprüche 1 bis 11, **dadurch gekennzeichnet, daß** eine Fangvorrichtung (8) für die Zugöse vorgesehen ist.

13. Kupplungsvorrichtung nach einem der Ansprüche 1 bis 12, **dadurch gekennzeichnet, daß** eine Grundplatte (9) mit Befestigungsöffnungen (91) für die Aufnahme von Schrauben (92) od. dgl. vorgesehen ist.

14. Kupplungsvorrichtung nach Anspruch 13, **dadurch gekennzeichnet daß** die Grundplatte (9) eine mit einem Innengewinde ausgebildete Aufnahmeöffnung (93), insbesondere für die Kupplungskugel (7), aufweist.

15. Kupplungsvorrichtung nach Anspruch 14, **dadurch gekennzeichnet, daß** die Kupplungskugel (7) einen mit einem dem Innengewinde gegengleichen Außengewinde (72) ausgebildeten Fortsatz (71) aufweist.

16. Kupplungsvorrichtung nach Anspruch 15, **dadurch gekennzeichnet, daß** der Fortsatz (71) eine Innensechskant-Bohrung (73) od. dgl. und/oder an einem der Kupplungskugel (7) anliegenden Ende (74) eine Schraubfläche (75) aufweist.

17. Kupplungsvorrichtung nach einem der Ansprüche 1 bis 16, **dadurch gekennzeichnet, daß** die Kupplungskugel (7) wenigstens eine Schmieröffnung (76) aufweist.

## Claims

1. A hitch apparatus with a hitch ball (7) for receiving a towing eye comprising a ball socket and a holding-down device (1), with the holding-down device (1) being swivelable about a swivel axis (11) from a first position to a second position and being fixable in the first position by means of at least one fixing element (3), and with a release element (4) being provided for displacing the holding-down device (1) from the second position to the first position, **characterized in that** an actuating element (2) is provided, with a first holding force acting by the actuating element (2) on the holding-down device (1) in the first position when the fixing element (3) is released, and a second holding force acting in the second position.

2. A hitch apparatus according to claim 1, **characterized in that** the actuating element (2) is configured as a pressure element, especially as a spring element (21), pressurizable piston element (25) or the like.

3. A hitch apparatus according to claim 1 or 2, **characterized in that** the fixing element (3), of which there is at least one, is joined to a remote-control unit (6).

4. A hitch apparatus according to claim 1, 2 or 3, **characterized in that** the fixing element (3), of which there is at least one, is configured as a swivelable flap (31) or the like.

5. A hitch apparatus according to claim 4, **characterized in that** the flap (31) is spring-loaded and a stop (32) is provided.

6. A hitch apparatus according to claim 5, **characterized in that** the holding-down device (1) loads the flap (31) in the direction towards the stop (32) in the first position under load.

7. A hitch apparatus according to one of the claims 1 to 6, **characterized in that** the fixing element (3) is configured as a pin (35).

8. A hitch apparatus according to one of the claims 1 to 7, **characterized in that** the release element (4) comprises a nose (41).

9. A hitch apparatus according to one of the claims 1 to 8, **characterized in that** a holding-down screw (5) is provided which is detachably connected with the holding-down device (1).

10. A hitch apparatus according to claim 9, **characterized in that** the holding-down screw (5) comprises a hexagon socket bore (51) or the like.

11. A hitch apparatus according to claim 9 or 10, **characterized in that** the holding-down screw (5) comprises at least one lubricating opening (52).

12. A hitch apparatus according to one of the claims 1 to 11, **characterized in that** a catching apparatus (8) for the towing eye is provided.

13. A hitch apparatus according to one of the claims 1 to 12, **characterized in that** a base plate (9) with fastening openings (91) is provided for receiving screws (92) or the like.

14. A hitch apparatus according to claim 13, **characterized in that** the base plate (9) comprises a receiving opening (93) formed with an inside thread, especially for the hitch ball (7).

15. A hitch apparatus according to claim 14, **characterized in that** the hitch ball (7) comprises a nose (71) arranged with an external thread (72) which is diametrically opposed to the inside thread.

16. A hitch apparatus according to claim 15, **characterized in that** the nose (71) comprises a hexagon socket bore (73) or the like and/or a screw surface (75) at one end resting on the hitch ball (7).

17. A hitch apparatus according to one of the claims 1 to 16, **characterized in that** the hitch ball (7) comprises at least one lubricating opening (76).

## Revendications

1. Dispositif d'attelage avec une boule d'attelage (7) destinée à recevoir un anneau de couplage de remorque possédant un réceptacle sphérique et avec un élément d'appui (1), lequel élément d'appui (1) peut pivoter autour d'un axe de pivotement (11) entre une première position et une seconde position et peut être fixé dans la première position au moyen d'au moins un élément de fixation (3), et dans lequel un élément de déclenchement (4) est prévu pour amener l'élément d'appui (1) de la seconde position à la première position, **caractérisé en ce qu'**il est prévu un élément d'ajustement (2), lequel élément d'ajustement (2) exerce une première force de maintien sur l'élément d'appui (1) dans la première position et une seconde force de maintien dans la seconde position lorsque l'élément de fixation (3) est défait.

2. Dispositif d'attelage selon la revendication 1, **caractérisé en ce que** l'élément d'ajustement (2) est conformé comme un élément d'appui, en particulier comme un élément de ressort (21), un élément de piston (25) pouvant être soumis à une pression ou similaire.

3. Dispositif d'attelage selon la revendication 1 ou 2, **caractérisé en ce que** l'élément de fixation (3) au nombre d'un au moins est relié à une unité de commande à distance (6).

4. Dispositif d'attelage selon la revendication 1, 2 ou 3, **caractérisé en ce que** l'élément de fixation (3) au nombre d'un au moins est conformé comme un volet pivotant (31) ou similaire.

5. Dispositif d'attelage selon la revendication 4, **caractérisé en ce que** le volet (31) est contraint par ressort et il est prévu une butée (32).

6. Dispositif d'attelage selon la revendication 5, **caractérisé en ce que** l'élément d'appui (1) contraint le volet (31) en direction de la butée (32) dans la première position sous l'effet d'une charge.

7. Dispositif d'attelage selon l'une quelconque des revendications 1 à 6, **caractérisé en ce que** l'élément de fixation (3) est conformé comme un goujon (35).

8. Dispositif d'attelage selon l'une quelconque des revendications 1 à 7, **caractérisé en ce que** l'élément de déclenchement (4) possède une saillie (41).

9. Dispositif d'attelage selon l'une quelconque des revendications 1 à 8, **caractérisé en ce qu'**il est prévu une vis de maintien (5) reliée de manière amovible à l'élément d'appui (1).

10. Dispositif d'attelage selon la revendication 9, **caractérisé en ce que** la vis de maintien (5) possède une empreinte à six pans creux (51) ou similaire.

11. Dispositif d'attelage selon la revendication 9 ou 10, **caractérisé en ce que** la vis de maintien (5) possède au moins une ouverture de lubrification (52).

12. Dispositif d'attelage selon l'une quelconque des revendications 1 à 11, **caractérisé en ce qu'**il est prévu un dispositif d'accrochage (8) pour l'anneau de couplage de remorque.

13. Dispositif d'attelage selon l'une quelconque des revendications 1 à 12, **caractérisé en ce qu'**il est prévu une plaque de base (9) avec des ouvertures de fixation (91) pour recevoir des vis (92) ou similaires.

14. Dispositif d'attelage selon la revendication 13, **caractérisé en ce que** la plaque de base (9) possède une ouverture de réception (93) dotée d'un filetage intérieur, en particulier pour la boule d'attelage (7).

15. Dispositif d'attelage selon la revendication 14, **caractérisé en ce que** la boule d'attelage (7) possède une saillie (71) possédant un filetage extérieur (72) correspondant.

16. Dispositif d'attelage selon la revendication 15, **caractérisé en ce que** la saillie (71) possède un réceptacle à six pans creux (73) ou similaire et/ou une surface de vissage (75) à une extrémité (74) contiguë à la boule d'attelage (7).

17. Dispositif d'attelage selon l'une quelconque des revendications 1 à 16, **caractérisé en ce que** la boule d'attelage (7) possède au moins une ouverture de lubrification (76).
